# DEMANDE DE BREVET EUROPEEN

(11) **EP 2 165 872 A1**
(43) Date de publication de la demande: **24.03.2010**
(21) Numéro de dépôt: 09170005.4
(22) Date de dépôt: 11.09.2009
(51) Int. Cl.: B60K 11/08, B60R 16/023

(54) **Dispositif anti-recyclage d'air pour un groupe moto-ventilateur d'un véhicule automobile**

(30) Priorité: 23.09.2008 FR 0856403
(71) Demandeur: Peugeot Citroën Automobiles SA, 78140 Vélizy-Villacoublay (FR)
(72) Inventeur: Charpentier, Hervé, 25230 DASLE (FR); Lepine, Arnaud, 25420 Bart (FR); Maitrot, Olivier, 25200 MONTBELIARD (FR)
(74) Mandataire: Ménès, Catherine

(57) **Abrégé**

L'invention concerne un dispositif anti-recyclage d'air pour un groupe moto-ventilateur d'un véhicule automobile, comprenant deux cloisons latérales (4 et 5) délimitant ce flux d'air, **caractérisé en ce qu**'il comprend, en outre, une cloison supérieure (6) s'étendant au dessus des deux cloisons latérales (4 et 5).

L'invention concerne aussi une cassette de groupe moto-ventilateur comprenant un tel dispositif et un bloc avant de véhicule automobile avec une telle cassette.

Application dans le domaine des véhicules automobiles.

## Description

La présente invention concerne, d'une façon générale, un dispositif anti-recyclage d'air pour un groupe moto-ventilateur d'un véhicule automobile.

Le bloc avant d'un véhicule automobile comprend au moins une bouche d'air, disposée à l'avant de ce bloc et à proximité du pare-choc avant, pour réaliser une entrée d'air extérieur frais servant à refroidir les différents éléments d'échange thermique présents dans le véhicule. Ces éléments peuvent notamment être le radiateur ainsi que son ventilateur associé, le cas échéant un échangeur de chaleur auxiliaire tel qu'un condenseur faisant partie du circuit de refroidissement de l'habitacle du véhicule et/ou un refroidisseur d'air de suralimentation. Ces divers éléments forment le groupe moto-ventilateur du véhicule.

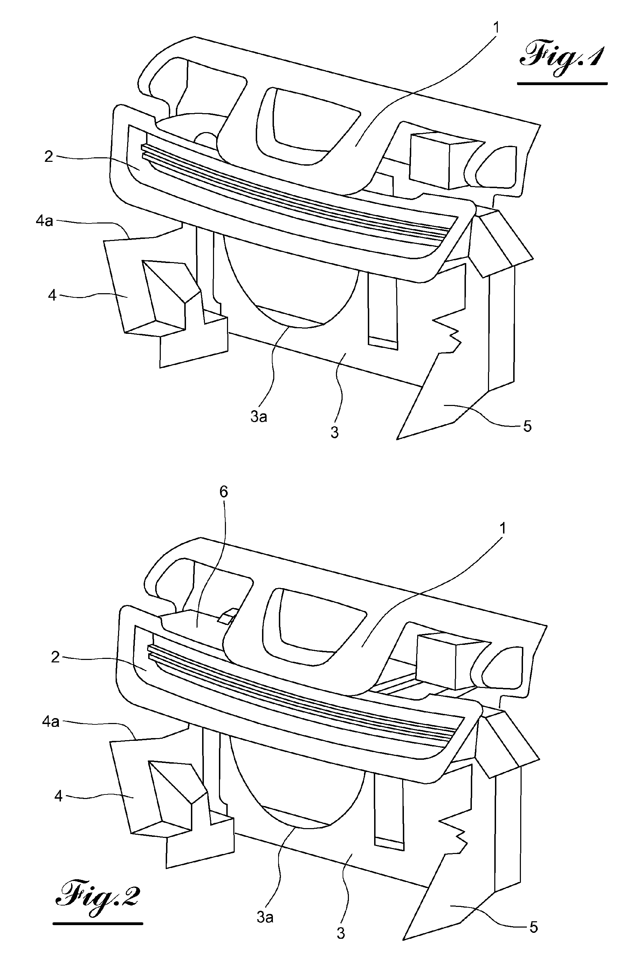

La figure 1 montre une partie de bloc avant d'un véhicule automobile avec un acheminement classique de l'air d'entrée.

Ce flux d'air extérieur frais permet d'améliorer le refroidissement des différents composants sous moteur, l'air frais admis par la ou les bouches 2 d'entrée d'air, en général sous forme d'une ou de grilles, étant canalisé vers la cassette du groupe moto-ventilateur 3, en abrégé GMV, qui va le pulser vers l'environnement moteur. L'air frais qui entre par la bouche d'entrée d'air 2 est canalisé vers le groupe moto-ventilateur 3 par un dispositif connu d'anti-recyclage 4, 5.

Ce dispositif connu d'anti-recyclage est composé de deux cloisons latérales anti-recyclage 4 et 5, s'étendant sensiblement verticalement. Ces cloisons latérales 4 et 5 servent aussi à éviter que de l'air chaud du moteur soit acheminé avec l'air extérieur provenant de la bouche d'entrée 2.

En effet, quand le ventilateur du groupe moto-ventilateur est en marche, il crée une forte dépression dans la cassette du groupe ce qui peut provoquer l'aspiration d'une partie de l'air chaud en provenance du moteur en le mélangeant avec l'air frais extérieur en provenance de la bouche d'entrée 2. Il s'ensuit l'acheminement d'un mélange d'air plus chaud que l'air extérieur frais vers le groupe moto-ventilateur avec une fonction de refroidissement de celui-ci affaiblie. Ce phénomène, appelé recyclage, nuit donc au bilan thermique du circuit de refroidissement, en particulier au niveau de la pression du circuit de climatisation, de la température d'eau, de la température de l'air de suralimentation et de la température sous le capot moteur.

Accessoirement, il est à noter qu'à la figure 1, un évidement 4a est visible sur au moins une cloison latérale 4, cet évidement pouvant servir à la réception d'une partie du pare-choc de la face avant du véhicule. De plus, la façade 3 de la cassette de groupe moto-ventilateur comprend une ouverture 3a occupant une grande partie de la superficie de cette façade et correspondant au ventilateur de ce groupe.

De telles cloisons latérales sont, par exemple, montrées par le document FR-A-2 868 484.

Si de telles cloisons latérales permettent de diminuer fortement le phénomène de mélange d'air chaud interne avec de l'air frais de l'extérieur, lorsque les véhicules ont un grand porte à faux ou une calandre haute, l'air extérieur peut être amené à circuler par-dessus le groupe moto-ventilateur via la zone calandre du véhicule et le refroidissement perd en efficacité du fait de cette perte de flux d'air.

Ainsi dans DE 10 2007 024 898, on a proposé une structure de protection de l'entrée d'air vers une unité d'échange de chaleur constitué de deux éléments en forme de L formant l'un, une paroi supérieure et une paroi latérale et l'autre, une paroi inférieure et une paroi latérale. Dans EP 1 142 742 est décrit un conduit d'air en forme de cadre monté à l'avant d'une unité d'échange de chaleur.

Par ailleurs, de nombreux dispositifs électroniques peuvent être maintenant utilisés pour faciliter la conduite du véhicule. Un tel dispositif peut être, par exemple et sans que cela soit limitatif, un dispositif ARTIV, c'est-à-dire un capteur aide respect temps inter-véhicule pour la conduite, notamment en association avec un dispositif de régulation de vitesse du type ACC, c'est-à-dire un régulateur d'allure et d'espacement, pour lequel la distance avec le véhicule précédant celui portant ce dispositif est à déterminer.

Ce dispositif électronique peut être aussi un dispositif appelé communément « boîte froide » qui regroupe plusieurs dispositifs électroniques comme des calculateurs ou systèmes de pilotage électronique ou d'aide à la conduite du véhicule, par exemple des systèmes du type ABS ou ESP.

Quand un tel dispositif électronique est implanté à un endroit du véhicule, il faut s'assurer que ses émissions ou réceptions sont isolées électriquement des éléments environnants du véhicule afin qu'elles ne soient pas perturbées par des parasites émis par ces éléments. Ainsi, si un tel dispositif est implanté à proximité du groupe moto-ventilateur, les pales du ventilateur du groupe moto-ventilateur, par exemple, peuvent créer une telle perturbation.

La présente invention a pour but d'améliorer l'acheminement d'air frais extérieur, capté par la bouche d'entrée à l'avant du véhicule, vers le groupe moto-ventilateur du véhicule en évitant des pertes de flux d'air ou un mélange avec d'autres flux d'air plus chaud pendant cet acheminement tout en protégeant également l'environnement des perturbations électromagnétiques liées au fonctionnement du groupe moto-ventilateur.

A cet effet, l'invention a pour objet un dispositif anti-recyclage d'air pour un groupe moto-ventilateur d'un véhicule automobile, le dispositif comprenant deux cloisons latérales délimitant ce flux d'air, **caractérisé en ce qu**'il comprend, en outre, une cloison supérieure s'étendant au dessus des deux cloisons latérales, une partie au moins de la cloison supérieure étant prévue pour protéger l'environnement du groupe moto-ventilateur des perturbations électromagnétiques liées au fonctionnement dudit groupe moto-ventilateur.

Selon des caractéristiques additionnelles de la présente invention :
- la cloison supérieure présente ses deux parties d'extrémité longitudinale reposant chacune sur une cloison latérale respective,
- la cloison supérieure et les cloisons latérales forment une pièce unique,
- au moins une des cloisons latérales est reliée par un moyen d'articulation avec la cloison supérieure de manière à pouvoir être rabattue contre celle-ci, quand non encore mise en place,
- ce moyen d'articulation est un film plastique pliable,
- la cloison supérieure est au moins pour partie revêtue ou intégrant un film métallique, par exemple collé sur la face de ladite cloison portant un dispositif électronique disposé à proximité,
- ladite cloison est constituée d'un matériau isolant protégeant l'environnement du groupe moto-ventilateur des perturbations électromagnétiques liées au fonctionnement du groupe moto-ventilateur,
- au moins une de ses cloisons comprend au moins une ouverture fermée par un volet.

L'invention concerne également une cassette contenant un groupe moto-ventilateur de véhicule automobile, **caractérisée en ce que** sa façade d'entrée d'air porte un tel dispositif d'anti-recyclage.

Avantageusement, la cloison supérieure du dispositif anti-recyclage comprend des moyens de fixation coopérant avec des moyens complémentaires portés par ladite façade de la cassette, ces moyens pouvant être sous la forme de languettes portées par l'une coopérant avec des encoches de réception de celles-ci sur l'autre.

L'invention concerne enfin un bloc avant de véhicule automobile, **caractérisé en ce qu**'il comporte un tel dispositif anti-recyclage ou une telle cassette de groupe moto-propulseur.

Avantageusement, le bloc avant comportant un capot avec son dispositif de verrouillage interne, la cloison supérieure du dispositif anti-recyclage est dimensionnée et/ou positionnée dans ce bloc avant pour empêcher un accès non autorisé par l'extérieur audit dispositif de verrouillage.

L'invention va maintenant être décrite plus en détail mais de façon non limitative en regard des figures annexées, dans lesquelles :
- la figure 1 est une représentation schématique d'une vue en perspective d'un bloc avant de véhicule automobile avec un dispositif anti-recyclage selon l'état de la technique,
- la figure 2 est une représentation schématique d'une vue en perspective d'un bloc avant de véhicule automobile avec un dispositif anti-recyclage conformément à l'invention,
- la figure 3 est une représentation schématique d'une vue en perspective avant de la cassette du groupe moto-ventilateur avec une première forme de réalisation du dispositif anti-recyclage conformément à l'invention,
- la figure 4 est une représentation schématique d'une vue en perspective avant d'une cloison supérieure de dispositif anti-recyclage conformément à l'invention, les éléments de fixation de la cloison supérieure du dispositif avec la façade de la cassette du groupe moto-ventilateur étant visibles à cette figure,
- la figure 5 est une représentation schématique d'une vue en perspective avant de la cassette du groupe moto-ventilateur avec une seconde forme de réalisation du dispositif anti-recyclage conformément à l'invention, la cloison supérieure de ce dispositif formant une pièce commune avec les cloisons latérales,
- la figure 6 est une représentation schématique d'une vue en perspective avant de la cassette du groupe moto-ventilateur avec une troisième forme de réalisation du dispositif anti-recyclage conformément à l'invention, la cloison supérieure de ce dispositif portant un dispositif électronique, de préférence, en l'isolant de l'extérieur.

La figure 1 a déjà été décrite dans la partie introductive de la présente description.

La figure 2 reprend essentiellement les caractéristiques du bloc avant décrites à la figure 1 à la différence que le dispositif d'anti-recyclage décrit à cette figure 2 et conforme à la présente invention comprend une cloison supérieure 6 disposée au dessus des cloisons latérales 4 et 5 en coiffant celles-ci.

En effet, pour pallier le problème déjà mentionné précédemment, il est obtenu ainsi une obturation de l'ouverture du dispositif d'anti-recyclage dans sa partie supérieure, cette ouverture présentant le désavantage de conduire une partie de l'air extérieur frais acheminé de la bouche d'entrée à ne pas être dirigée vers le groupe moto-ventilateur et, au contraire, une partie de l'air chaud se trouvant sous le capot du véhicule à être acheminée vers ce groupe.

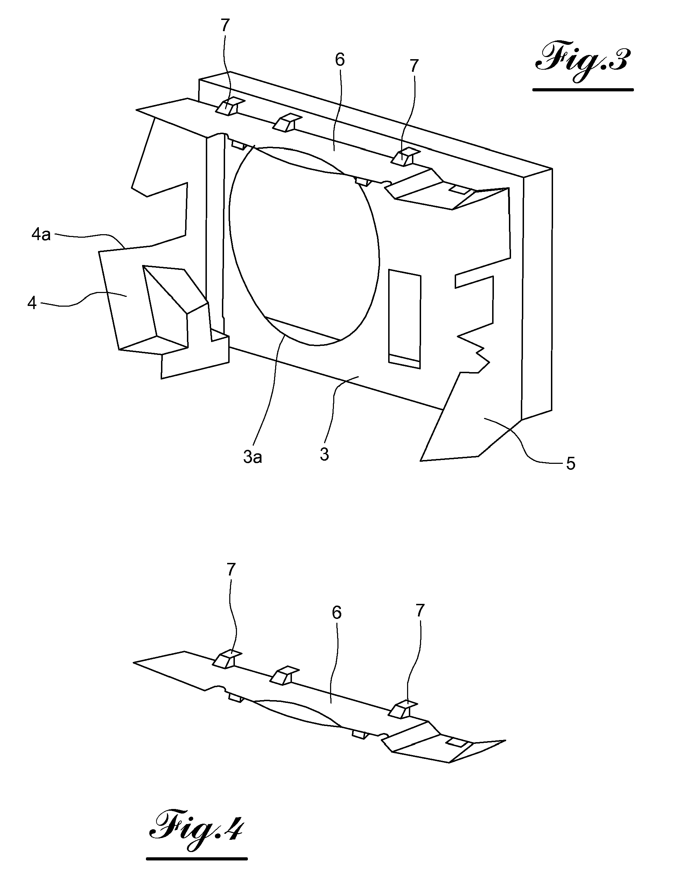

La cloison supérieure 6 du dispositif est aussi visible à la figure 3, concernant la cassette du groupe moto-ventilateur avec le dispositif anti-recyclage selon la présente invention.

Les cloisons latérales 4 et 5, ainsi que la cloison supérieure 6 sont sensiblement de forme plane. Les cloisons latérales 4 et 5 présentent un contour complexe correspondant à la géométrie des pièces du bloc avant les environnant, par exemple le pare-choc. L'axe longitudinal des cloisons latérales 4 et 5 s'étend en position sensiblement verticale tandis que l'axe longitudinal de la cloison supérieure s'étend en position horizontale avec chacune des extrémités longitudinales de cette cloison supérieure 6 en appui sur le bord supérieur d'une cloison latérale 4 ou 5.

Dans cette première forme de réalisation de cette cloison supérieure 6, celle-ci est une pièce unitaire, indépendante des cloisons latérales 4 et 5. Elle est avantageusement réalisée en plastique rigide en pouvant être fixée à un élément fixe environnant pour assurer le bon cloisonnement du flux d'air. Ceci peut se faire avec les armatures du pare-choc et/ou avec la façade avant 3 de la cassette de groupe moto-ventilateur.

Cette première forme de réalisation de l'invention offre un bon guidage du flux d'air extérieur frais vers le groupe moto-ventilateur. Cela demande certes l'ajout d'une pièce supplémentaire, mais vu le coût réduit de cette cloison en plastique avec une forme relativement simple à réaliser à mettre en comparaison avec l'avantage obtenu précédemment mentionné, cela a une réalité économique.

La figure 4 montre des moyens de fixation de la cloison supérieure 6 servant à sa solidarisation avec la façade avant de la cassette du groupe moto-ventilateur. Cette cloison supérieure 6 comprend plusieurs languettes 7 régulièrement réparties sur sa longueur qui peuvent servir à la fixation de cette cloison supérieure 6 en coopérant avec des évidements de réception prévus dans la façade avant de la cassette du groupe moto-ventilateur.

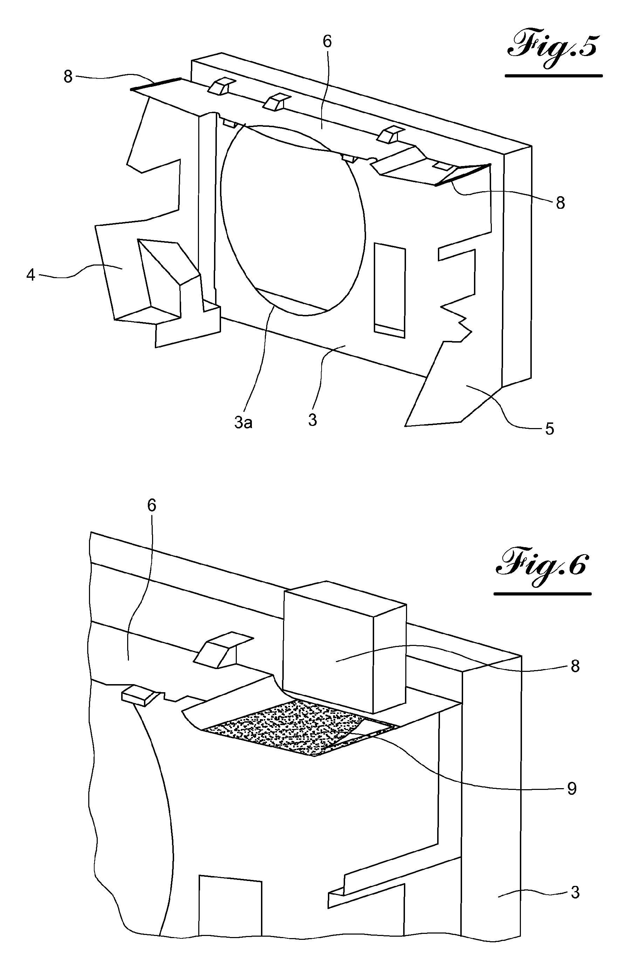

La figure 5 montre une seconde forme de réalisation de la cloison supérieure 6 selon la présente invention. Dans cette forme de réalisation, les cloisons latérales 4 et 5 et la cloison supérieure 6 sont reliées entre elles et même peuvent former une seule et unique pièce.

Ceci peut être fait de différentes manières, par exemple par une liaison rigide non adaptable. Il est cependant préféré une liaison permettant de réaliser le pliage des cloisons latérales 4 et 5 contre la cloison supérieure 6 pour le stockage d'un tel dispositif d'anti-recyclage préalablement à sa mise en place.

Avantageusement, les deux cloisons latérales 4 et 5 sont reliées chacune à la cloison supérieure 6 par l'intermédiaire d'une articulation 8, par exemple un film repliable sur lui-même et formant charnière. Ainsi, il est utilisé pour le dispositif d'anti-recyclage une pièce unique pouvant être facilement repliée sur elle-même avant son montage dans le bloc avant du véhicule, ce montage étant de préférence contre la cassette du groupe moto-ventilateur.

La figure 6 montre le dispositif anti-recyclage selon la présente invention, la cloison supérieure 6 portant un dispositif électronique auxiliaire 10.

Cette cloison supérieure 6 est prévue pour assurer une fonction anti-perturbation électrique pour ce dispositif électronique.

De nombreux dispositifs électroniques peuvent être maintenant utilisés pour faciliter la conduite du véhicule. Un tel dispositif peut être, par exemple et sans que cela soit limitatif, un dispositif ARTIV, c'est-à-dire un capteur aide respect temps inter-véhicule pour la conduite, notamment en association avec un dispositif de régulation de vitesse du type ACC, c'est-à-dire un régulateur d'allure et d'espacement, pour lequel la distance avec le véhicule précédant celui portant ce dispositif est à déterminer.

Ce dispositif électronique peut être aussi un dispositif appelé communément « boîte froide » qui regroupe plusieurs dispositifs électroniques comme des calculateurs ou systèmes de pilotage électronique ou d'aide à la conduite du véhicule, par exemple des systèmes du type ABS ou ESP.

Quand un tel dispositif électronique est implanté à un endroit du véhicule, il faut s'assurer que ses émissions ou réceptions sont isolées électriquement des éléments environnants du véhicule afin qu'elles ne soient pas perturbées par des parasites émis par ces éléments.

Dans le cas du dispositif anti-recyclage portant par sa cloison supérieure un tel dispositif, les pales du ventilateur du groupe moto-ventilateur, par exemple, peuvent créer une telle perturbation. Pour cela, il est avantageux qu'une couche 9 métallique soit insérée entre le dispositif électronique et son environnement, notamment le groupe moto-ventilateur. La cloison supérieure 6 peut, préférentiellement, recevoir cet écran soit en collant un film métallique, au moins partiellement, sur cette cloison, soit en l'intégrant directement à la cloison 6.

D'autres formes de réalisation pour la cloison supérieure du dispositif d'anti-recyclage, non montrées aux figures, sont néanmoins possibles. Certaines de ces formes vont être détaillées ci-après.

Une troisième forme de réalisation résulte d'une modification de la cloison supérieure afin de ne pas perturber le choc piéton et même d'améliorer la réponse de la cassette du groupe moto-ventilateur pour un tel choc.

Des dispositifs d'amortissement de l'impact d'un piéton en cas de collision accidentelle deviennent obligatoires. Ces dispositifs permettent ainsi, pour une plage de vitesses donnée du véhicule, de minimiser les blessures du piéton, en évitant les fractures du crâne ou les fractures des jambes.

Actuellement, pour répondre à des exigences de style tendant à une révision des proportions du véhicule, la longueur du porte à faux avant du véhicule a tendance à être réduite, cette réduction s'accompagnant automatiquement d'une diminution des volumes sous le capot du véhicule. Ceci est très désavantageux pour le traitement des chocs piétons. Il convient donc que le bloc avant du véhicule comprenne des éléments déformables afin que les risques pour un piéton lors d'un choc avec le véhicule soient minimisés.

Ainsi, la cloison supérieure et les cloisons latérales sont, avantageusement, dans un matériau facilement déformable et d'une forme permettant le recul d'autres éléments sur elles. Dans ce cas, les cloisons agissent comme dissipateurs de l'énergie du choc.

La cloison supérieure et les cloisons latérales sont en un matériau souple, de préférence un polypropylène auquel est ajouté de l'EPDM.

Selon une quatrième forme de réalisation, la cloison supérieure 6 est configurée pour constituer elle-même un absorbeur de choc permettant ainsi de remplacer un absorbeur choc habituellement prévu, du fait notamment de la rigidité qu'elle engendre au niveau de la calandre. L'effort absorbé par la cloison supérieure spécifiquement configurée est équivalent à celui absorbé par un absorbeur de choc habituel.

On peut ainsi gagner une pièce ce qui représente un gain de poids, de coût pièce et de logistique. La place ainsi libérée par l'absence d'absorbeur de choc peut alors être dédiée à la création d'interfaces de fixation pour l'implantation de dispositif tel qu'un boitier de volets pilotés intégrés pour les véhicules hybrides.

La cinquième forme de réalisation de l'invention contribue à améliorer l'inviolabilité de la serrure capot.

Cette serrure peut se trouver à proximité de cette cloison supérieure, par exemple au dessus d'elle. La cloison, en plus de diriger le flux d'air extérieur, présentera avantageusement une forme et des dimensions de manière qu'elle puisse obstruer tout accès direct non désiré de l'extérieur à la serrure capot, notamment par la bouche d'entrée d'air. Cette cloison peut ainsi également répondre à des critères de résistance suffisante pour empêcher tout corps physique de passer vers la zone de commande d'ouverture de capot située juste au dessus de la cloison.

Dans une sixième forme de réalisation de l'invention, au moins une des cloisons du dispositif anti-recyclage comprend au moins une ouverture ajustable.

Le but de l'ajout d'au moins une ouverture ajustable est de permettre de moduler l'acheminement en air vers le groupe moto-ventilateur selon les circonstances de marche du véhicule. Cette ouverture peut être orientée vers l'intérieur du dispositif ou l'extérieur de celui-ci. L'ouverture peut aussi présenter une double possibilité d'ouverture du côté intérieur comme du côté extérieur selon les circonstances. L'orientation de l'ouverture est, de préférence, vers l'extérieur du dispositif d'anti-recyclage d'air.

Quand le ventilateur du groupe moto-ventilateur tourne, comme précédemment décrit, une dépression se crée notamment à l'intérieur de l'espace du dispositif d'anti-recyclage, ce qui maintient l'ouverture fermée et assure que tout l'air extérieur frais est acheminé vers le groupe. En cas de possibilité d'ouverture vers l'intérieur, ladite ouverture est alors à bloquer dans ce cas de figure par un moyen de blocage adéquat.

Quand le ventilateur du groupe moto-ventilateur ne tourne pas, il se crée une surpression à l'intérieur de l'espace du dispositif d'anti-recyclage, ce qui permet à l'ouverture ajustable de s'ouvrir et une partie de l'air peut être détournée pour aller refroidir des éléments du véhicule positionnés sous le capot de celui-ci. A titre d'exemples, ces éléments peuvent être le col d'entrée d'air, la batterie ou des éléments électroniques de contrôle ou de commande disposés sous ce capot.

Il peut y avoir plusieurs ouvertures, de préférence sous la forme de volets s'ouvrant vers l'extérieur du dispositif et rappelés en position de fermeture automatique par des moyens de rappel, par exemple sous la forme de ressorts. Cette ouverture ou ces ouvertures peuvent concerner une cloison latérale, les deux cloisons latérales et/ou la cloison supérieure.

Les avantages de la présente invention sont nombreux. Quelques uns de ses avantages vont maintenant être cités.

Grâce à la cloison supérieure conformément à la présente invention, les pertes de flux d'air extérieur frais vers le groupe moto-ventilateur sont minimisées.

Selon la seconde forme de réalisation de l'invention, une pièce unitaire comprenant les trois cloisons réunies permet de réduire le nombre de références de pièces. De plus, le fait d'utiliser une pièce unitaire empêche toute possibilité de fuite d'air entre les trois cloisons. Les films charnières qui relient les différentes parties permettent de replier la pièce sur elle-même pour le transport et réduit donc son encombrement et, par conséquent, son coût d'acheminement.

Selon l'invention, le film métallique sur la cloison est un moyen avantageux de permettre un bon fonctionnement d'un dispositif électronique, notamment de l'ARTIV. Le surcoût lié à cette intégration est nécessaire et évite la création d'une pièce spécifique supplémentaire dont le coût serait beaucoup plus élevé.

Une telle cloison ne modifie pas sensiblement les prestations choc piéton mais au contraire peut les améliorer, selon la troisième forme de réalisation de l'invention, voire même y contribuer en se substituant à l'absorbeur de choc selon la quatrième forme de réalisation.

Selon la cinquième forme de réalisation de l'invention, la cloison supérieure améliore l'inviolabilité véhicule au niveau de la serrure capot.

Pour finir, selon la sixième forme de réalisation de l'invention, un dispositif anti-recyclage avec une ou des ouvertures sur au moins une de ses cloisons permet un grand échantillonnage de réponses à divers situations de vie rencontrées par le véhicule.

L'utilisation d'une telle cloison supérieure permet de résoudre le problème important de la perte d'air extérieur frais vers le groupe moto-ventilateur après son admission par la bouche d'entrée d'air du bloc avant du véhicule. Elle peut, en outre, apporter une solution ou une amélioration aux cinq autres problèmes auxiliaires spécifiques en mettant en oeuvre seulement des modifications peu coûteuses, ce qui implique un prix de fabrication d'un tel dispositif réduit.

Ce dispositif anti-recyclage, selon la présente invention, peut être adapté pour tout type de véhicule où l'anti-recyclage de l'air est à améliorer, notamment mais pas seulement quand il est compromis par des ouvertures en zone calandre de pare-chocs.

L'invention n'est nullement limitée aux modes de réalisation décrits et illustrés qui n'ont été donnés qu'à titre d'exemples.

## Revendications

1. Dispositif anti-recyclage d'air pour un groupe moto-ventilateur d'un véhicule automobile, comprenant deux cloisons latérales (4 et 5) délimitant ce flux d'air, **caractérisé en ce qu'**il comprend, en outre, une cloison supérieure (6) s'étendant au dessus des deux cloisons latérales (4 et 5), une partie au moins de la cloison supérieure (10) étant prévue pour protéger l'environnement du groupe moto-ventilateur des perturbations électromagnétiques liées au fonctionnement dudit groupe moto-ventilateur.

2. Dispositif selon la revendication 1, **caractérisé en ce que** la cloison supérieure (6) est revêtue ou intégrant un film métallique.

3. Dispositif selon la revendication 1, **caractérisé en ce que** la cloison supérieure (6) est constituée d'un matériau isolant pour protéger l'environnement du groupe moto-ventilateur des perturbations électromagnétiques liées au fonctionnement du groupe moto-ventilateur

4. Dispositif selon la revendication 1, **caractérisé en ce que** la cloison supérieure (6) présente ses deux parties d'extrémité longitudinale reposant chacune sur une cloison latérale (4 ou 5) respective.

5. Dispositif selon la revendication 2, **caractérisé en ce que** la cloison supérieure (6) et les cloisons latérales (4 et 5) forment une pièce unique.

6. Dispositif selon l'une quelconque des revendications précédentes, **caractérisé en ce qu'**au moins une des cloisons latérales (4 et 5) est reliée par un moyen d'articulation (8) avec la cloison supérieure (6) de manière à pouvoir être rabattue contre celle-ci, quand non encore mise en place.

7. Dispositif selon la revendication précédente, **caractérisé en ce que** ce moyen d'articulation est un film plastique pliable (8).

8. Dispositif selon l'une quelconque des revendications précédentes, **caractérisé en ce qu'**au moins une de ses cloisons (4, 5 ou 6) comprend au moins une ouverture fermée par un volet.

9. Cassette contenant un groupe moto-ventilateur de véhicule automobile, **caractérisée en ce que** sa façade (3) d'entrée d'air porte un dispositif d'anti-recyclage selon l'une quelconque des revendications précédentes.

10. Cassette selon la revendication précédente, **caractérisée en ce** la cloison supérieure (6) du dispositif anti-recyclage comprend des moyens de fixation (7) coopérant avec des moyens complémentaires portés par ladite façade (3) de la cassette, ces moyens pouvant être sous la forme de languettes portées par l'une coopérant avec des encoches de réception de celles-ci sur l'autre.

11. Bloc avant (1) de véhicule automobile, **caractérisé en ce qu'**il comporte un dispositif anti-recyclage selon l'une quelconque des revendications 1 à 6.

12. Bloc avant (1) de véhicule automobile, selon la revendication précédente, comportant un capot avec son dispositif de verrouillage interne à ce bloc avant (1), **caractérisé en ce que** la cloison supérieure (6) du dispositif anti-recyclage est dimensionnée et/ou positionnée dans ce bloc avant (1) pour empêcher un accès par l'extérieur audit dispositif de verrouillage.
